Europäisches Patentamt

European Patent Office

Office européen des brevets

(19)

(11) Veröffentlichungsnummer: **0 362 191**
**A2**

(12) # EUROPÄISCHE PATENTANMELDUNG

(21) Anmeldenummer: 89890252.3

(51) Int. Cl.5 **B65G 39/02 , B30B 5/04**

(22) Anmeldetag: 27.09.89

(30) Priorität: 27.09.88 AT 2376/88

(43) Veröffentlichungstag der Anmeldung:
04.04.90 Patentblatt 90/14

(84) Benannte Vertragsstaaten:
BE CH DE ES FR GB GR IT LI LU NL SE

(71) Anmelder: **Austria Metall Aktiengesellschaft**

**A-5282 Braunau am Inn(AT)**

(72) Erfinder: **Harreither, Rupert, Dipl.-Ing.**
**Wilhelmring 45**
**A-2500 Baden(AT)**

(74) Vertreter: **Hain, Leonhard, Dipl.-Ing.**
**Tal 18/IV**
**D-8000 München 2(DE)**

(54) **Tragrolle für Transportbänder, Prozessbänder oder Pressen, insbesondere Doppelbandpressen.**

(57) Tragrolle für Transportbänder, Preßbänder oder Pressen, insbesondere Doppelbandpressen, wobei eine zum Tragrohr konzentrische Tragwelle in diesem durchlaufend angeordnet ist, entweder die Tragwelle zwei Umfangsbereiche mit, die Innenwand des Tragrohres berührenden Erhebungen oder das Tragrohr zwei Umfangsbereiche an der Innenwand mit die Tragwelle berührenden Erhebungen aufweist und die Tragwelle in an sich bekannter Weise an ihren über das Tragrohr hinausreichenden Enden an der Maschine drehbar gelagert ist.

*Fig.1*

EP 0 362 191 A2

## Tragrolle für Transportbänder, Prozeßbänder oder Pressen, insbesondere Doppelbandpressen.

Bei Anwendungsfällen, bei denen eine sehr kleine Durchbiegung der Tragrolle im Verhältnis zur Dicke des transportierten, unter gezielter Einwirkung von Druck und Temperatur stehenden Gutes in einer Transportmaschine oder Bandpresse gefordert ist, sind gezielte konstruktive Maßnahmen nötig, um diese zu erreichen. Die Notwendigkeit kleiner Tragrollendurchbiegung ist dann gegeben, wenn eine vorgegebene Geometrie des Produktes einzuhalten ist.

Neben dem Ziel, durch Erhöhung der Biegesteifigkeit eine möglichst kleine Durchbiegung der Tragrolle im Kontaktbereich mit dem Transportband zu gewährleisten, bleibt als zusätzliche Maßnahme die Möglichkeit zur Kompensation der Restdurchbiegung durch besondere Formgebung des Tragrohres offen. Bekannte Maßnahmen zur Erhöhung der Biegesteifigkeit eines Tragrollensystems sind für jene Fälle, wo mit der bloßen Vergrößerung des Tragrollendurchmessers nicht mehr das Auslangen gefunden wird, das mehrmalige Unterstützen der durchgehenden Tragrolle mittels sogenannter Stützrollen, die mehrfache Lagerung der Tragrolle oder daraus abgeleitete Konstruktion.

Diese Konstruktionen sind aber dann problematisch, wenn das Tragrollensystem ungewöhnlichen Temperaturen bzw. Temperaturänderungen infolge Beheizung oder Kühlung ausgesetzt ist, da Schmierstoffprobleme sehr aufwendige Konstruktionen bedingen.

Die Lösung dieser Aufgabe erfolgt erfindungsgemäß dadurch, daß eine zum Tragrohr konzentrische Tragwelle in diesem durchlaufend angeordnet ist, entweder die Tragwelle zwei Umfangsbereiche mit, die Innenwand des Tragohres berührenden Erhebungen, oder das Tragrohr zwei Umfangsbereiche an der Innenwand mit die Tragwelle berührenden Erhebungen, aufweist und die Tragwelle in an sich bekannter Weise an ihren über das Tragrohr hinausreichenden Enden an der Maschine drehbar gelagert ist.

Die Position bzw. Distanz der beiden Erhebungen kann so gewählt werden, daß die Durchbiegung des Tragrohres ein Minimum ist. Das Tragrohr wird von der Tragwelle so aufgenommen, daß die infolge der Belastung auftretende Verformung der Tragwelle keinen wesentlichen störenden Einfluß auf das Tragrohr ausübt. Die Passung zwischen Tragrohr und Tragwelle ist so gewählt, daß auch bei Temperaturdifferenzen kein Klemmen auftritt. Die praktische Ausführung der zwei Lagerstellen für das Tragrohr kann vielgestaltig sein, da neben der Tragfähigkeit auch der Wärmeleitwiderstand durch konstruktive Maßnahmen und Werkstoffwahl beeinflußt werden kann. So ist es beispielsweise erfindungsgemäß möglich, diese Lagerstellen nicht als durchgehende Erhebungen auszuführen, sondern diese zu unterbrechen, oder die Distanz zwischen Tragrohr und Tragwelle durch Bolzen zu überbrücken.

Eine weitere Ausgestaltung der Erfindung kann so erfolgen, daß die Erhebungen der Tragwelle mit in, an der Innenwand des Tragrohres angeordneten Profilierungen verzahnen. Dadurch kann eine einfache axiale Führung und Sicherung des Tragrohres gegen Verschiebung erzielt werden.

Man kann weiters eine der beiden umlaufenden Erhebungen der Tragwelle axial unverschieblich mit dem Tragrohr verbunden ausführen, wodurch man ein Festlager und ein Loslager für das Tragrohr erhält. Dadurch können Wärmedehnungen einfach beherrscht und ein Verspannen des Tragrohres verhindert werden.

Eine weitere günstige Ausführung kann dabei so gestaltet sein, daß die beiden Erhebungen der Tragwelle jeweils durch Ringsegmente gebildet werden, die sowohl auf der Welle als auch im Tragrohr in ringförmige Profilierungen eingreifen. Auf diese Weise ist eine einfache Sicherung gegen axiale Verschiebung zwischen Welle und Tragrohr erzielbar.

Dabei ist die Montage besonders einfach, wenn das Tragrohr jeweils über den umlaufenden Nuten eine verschließbare Öffnung zum Einsetzen der Ringsegmente aufweist. Das Verschließen kann durch Verschweißen oder durch Einpressen erfolgen.

Um die durch die Deformation der Tragwelle entstehende Verschiebung des Tragrohres auszugleichen, ist es günstig, die Lager der Tragwelle in Richtung der Tragrohrverformung verschieblich auszuführen.

Die Erfindung wird anhand der nachfolgenden Zeichnungen beschrieben.

Es zeigen:

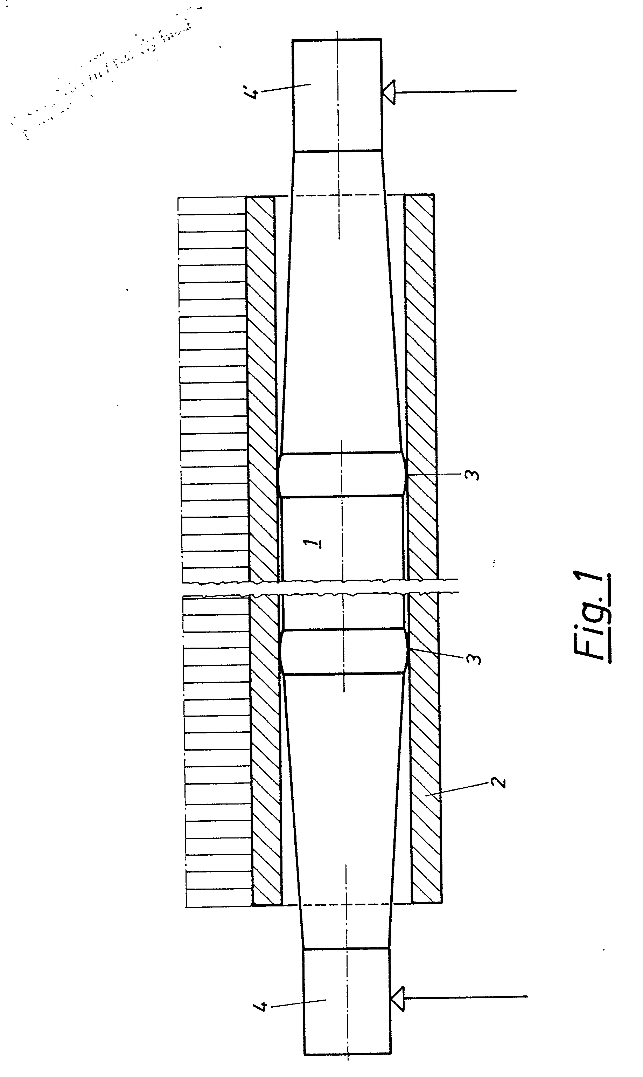

Fig. 1 eine Anordnung des erfindungsgemäßen Aufbaues.

Fig. 2 ein Detail einer erfindungsgemäßen Lagerung mittels Kreissegmenten.

Fig. 3 einen Schnitt längs III-III in Fig. 2.

Fig. 4 ein Detail einer Variante einer erfindungsgemäßen Lagerung mittels Kreissegmenten.

Die Tragwelle 1 liegt konzentrisch im Tragrohr 2 und trägt mittels ihrer an zwei Umlaufzonen angeordneten Erhebungen 3. An den beiden außerhalb des Tragrohres 2 befindlichen Enden der Tragwelle 1 sind Lagerzapfen 4 und 4' vorgesehen. Die Tragwelle 1 verjüngt sich von ihren Erhebungen zu den Lagerungen hin.

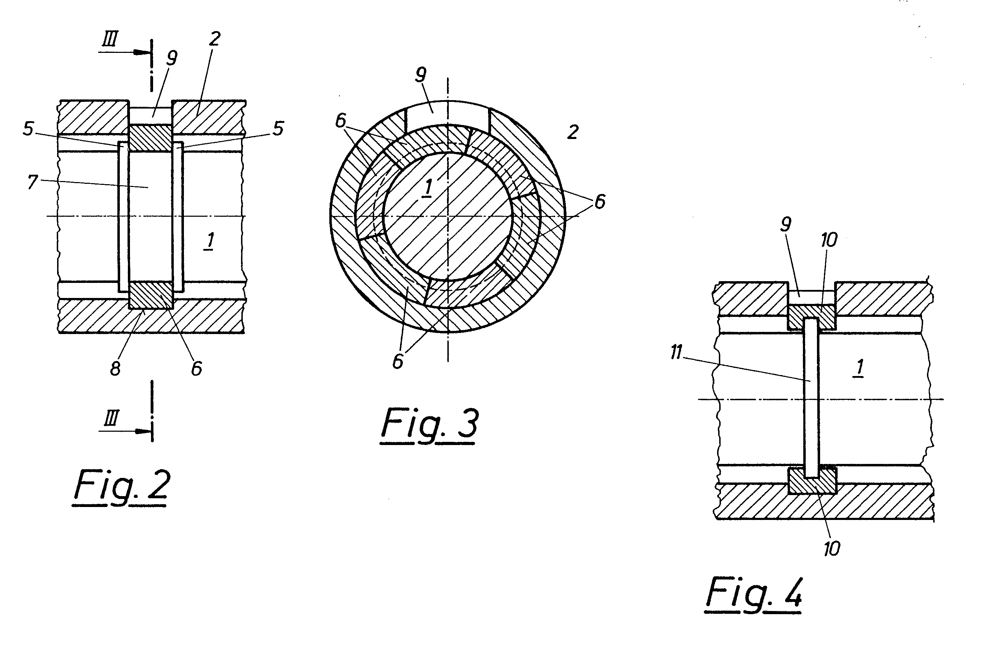

Bei der in Fig. 2 dargestellten Ausführung einer Lagerung des Tragrohres 2 mittels Ringsegmenten 6 sind diese in der durch zwei Bünde 5 gebildeten Nut 7 um die Tragwelle 1 angeordnet und ragen in die ringförmigen Profilierungen 8 der Tragwelle 1. Die Tragwelle 1 besitzt über ihren ringförmigen Profilierungen 8 eine von ihrer Außenseite verschließbaren Montagezugang 9. Durch Verdrehen von Welle zu Tragrohr wird nach dem jeweiligen Einschieben eines Kreissegmentes der Platz unter dem Montagezugang 9 für das Einbringen des nächsten Kreissegmentes geschaffen. Durch Wahl der Pressungen kann eine der beiden Lagerungen als axiales Festlager und das andere als Loslager ausgebildet werden.

In Fig. 4 ist eine Variante der Lagerung abgebildet, bei der Kreissegmente 10 über einen Bund 11 der Tragwelle 1 gereiht sind. Die Montage kann in der gleichen Weise, wie in Fig. 2 erläutert, erfolgen.

Die Erfindung ist nicht auf die angeführten Beispiel beschränkt.

## Ansprüche

1. Tragrolle für Transportbänder, Preßbänder oder Pressen insbesondere Doppelbandpressen, dadurch gekennzeichnet, daß eine zum Tragrohr (2) konzentrische Tragwelle (1) in diesem durchlaufend angeordnet ist, entweder die Tragwelle (1) zwei Umfangsbereiche mit, die Innenwand des Tragrohres (2) berührenden Erhebungen, oder das Tragrohr (2) zwei Umfangsbereiche an der Innenwand mit die Tragewelle berührenden Erhebungen, aufweist und die Tragwelle (1) in an sich bekannter Weise an ihren über das Tragrohr (2) hinausreichenden Enden an der Maschine drehbar gelagert ist.

2. Tragrolle nach Anspruch 1, dadurch gekennzeichnet, daß die Erhebungen der Tragwelle (1) mit in, an der Innenwand des Tragrohres (2) angeordneten Profilierungen verzahnen.

3. Tragrolle nach Anspruch 1, dadurch gekennzeichnet, daß eine der beiden umlaufenden Erhebungen der Tragwelle (1) axial unverschieblich mit dem Tragrohr (2) verbunden ist.

4. Tragrolle nach einem der vorhergehenden Ansprüche, dadurch gekennzeichnet, daß die beiden Erhebungen der Tragwelle (1) durch Ringsegmente (6) gebildet werden, die sowohl auf der Tragwelle (1) als auch im Tragrohr (2) in ringförmige Profilierungen (8) eingreifen.

5. Tragrolle nach einem der vorhergehenden Ansprüche, dadurch gekennzeichnet, daß das Tragrohr (2) jeweils über den umlaufenden Nuten (7) eine verschließbare Öffnung zum Einsetzen der Ringsegmente aufweist.

6. Tragrolle nach einem der vorhergehenden Ansprüche, dadurch gekennzeichnet, daß die Lager der Tragwelle (1) in Richtung der Tragrohrverformung verschieblich ausgeführt sind.

*Fig.1*

Fig. 4

Fig. 3

Fig. 2